# EUROPEAN PATENT SPECIFICATION

(11) **EP 1 988 062 B1**
(45) Date of publication and mention of the grant of the patent: **15.09.2010**
(21) Application number: 08007135.0
(22) Date of filing: 10.04.2008
(51) Int. Cl.: C03B 37/018

(54) **Device and method for manufacturing an optical preform**
Vorrichtung und Verfahren zur Herstellung einer optischen Vorform
Dispositif et procédé de fabrication d'une préforme optique

(30) Priority: 26.04.2007 NL 1033763
(43) Date of publication of application: 05.11.2008
(73) Proprietor: Draka Comteq B.V., 1083 HJ Amsterdam (NL)
(72) Inventor: Korsten, Marco, 5658 EV Eindhoven (NL); Jansen, Marc, 5513 AP Wintelre (NL); Kuijpers, Eric Aloysius, 5529 JB Eindhoven (NL)
(74) Representative: op den Brouw-Sprakel, Vera Stefanie Irene

(56) References cited:
- WO-A-89/02419
- FR-A- 2 253 723
- FR-A- 2 266 668

## Description

The present invention relates to a device and a method for manufacturing an optical preform by means of an internal vapour deposition process, comprising an energy source and a hollow, quartz substrate tube, which hollow substrate tube has a supply side, where glass-forming precursors are supplied to the interior of the hollow substrate tube, and a discharge side, where components which have not been deposited on the interior of the substrate tube are discharged, the energy source being movable along the length of the substrate tube between a reversal point on the supply side and a reversal point on the discharge side.

Such a device is known from Korean patent application No. 2003-774,952. Using the device that is known therefrom, an optical preform is made by means of an MCVD (Modified Chemical Vapour Deposition) process, in which a discharge tube and an insert tube are used, which discharge tube is attached to the substrate tube. The insert tube is disposed within the discharge tube and has a constant diameter along its length, which diameter is smaller than that of the discharge tube. Disposed within the insert tube is a soot scraping element, which comprises a bar which rotates in the interior of the insert tube and which is in contact with the internal diameter (inner surface) thereof. Between the insert tube and the discharge tube is an annular space, through which gases are passed.

From International application WO 89/02419 there is known a device for manufacturing an optical preform by means of an internal vapour deposition process, wherein a tubular element is mounted at the pump side of a substrate for the removal of solid, undeposited particles. In particular, such a device comprises a screw structure which follows the inner surface of the tubular element, which screw structure comprises an open gas conduit which is spiral-shaped and rotatable.

From French publication FR 2 266 668 a method for manufacturing an optical preform is known.

From French publication FR 2 253 723 a method for manufacturing an optical preform is known.

During the deposition of doped or undoped glass layers in the interior of a hollow, glass substrate tube, in particular by means of the PCVD (Plasma Chemical Vapour Deposition) process, layers of a minor quality quartz may be deposited, in particular in the region outside the path of reciprocation of the energy source moving along the length of the substrate tube, viz. the resonator. Examples of such low-quality quartz layers are, for example, so-called soot rings, but also quartz having a high internal stress caused by a high dopant content. Further examples are situations in which the plasma generated in the resonator will migrate slightly outside the resonator, as a result of which the plasma region will not be sharply defined, in particular on the discharge side of the hollow substrate tube. Such plasma regions lead to in inferior deposition of glass layers at both reversal points, in particular on the discharge side, as a result of which problems may arise, such as fracture of the preform itself.

The present inventors have found that such low quality quartz may adversely affect the substrate tube, in particular as a result of the formation of gass bubbles in the deposited glass layers when the hollow substrate tube is collapsed into a solid preform. In addition to that, the present inventors have found that such low quality quartz may come loose from the interior of the hollow substrate tube during the collapsing process, which may lead to contamination or to the formation of gas bubbles elsewhere in the substrate tube. Another negative aspect is the fact that cracks may occur in the minor quality quartz region, which cracks may propagate in the direction of the centre of the substrate tube, which is undesirable. The present inventors have furthermore found that the minor quality quartz may lead to clogging, as a result of which the pressure may increase to an undesirably high value during the deposition process, which will have an adverse effect the deposition process in the substrate tube, which effect will be perceived as a white colour in practice.

The substrate tube is made of a high quality quartz. In practice, however, the total length of the substrate tube will be greater than the length of the part of the substrate tube that is eventually converted into a glass fibre by means of a drawing process, because the two ends of the substrate tube, where deposition takes place, may cause undesirable side effects, viz. deposition defects, contamination, formation of bubbles and the like, so that the two ends are not suitable for forming an optical fibre therefrom.

The object of the present invention is thus to provide a device for manufacturing an optical preform by means of an internal vapour deposition process by which one or more of the aforesaid problems can be eliminated.

Another object of the present invention is to provide a device for manufacturing an optical preform by means of an internal vapour deposition process wherein no cracking of the glass layers and other undesirable effects can occur during the collapsing process, in which the hollow substrate tube, which is provided with glass layers that have been deposited on the interior of the hollow substrate tube, is converted into a solid preform.

The present invention as referred to in the preamble is characterised in that an insert tube is present in the interior of the substrate tube, on the discharge side thereof, which insert tube comprises a central portion and a truncated cone portion, wherein the external diameter of the end of the truncated cone portion is smaller than the external diameter of the central portion, which truncated cone portion faces towards the supply side, whilst furthermore the external diameter of the central portion is smaller than the internal diameter of the hollow substrate tube near the discharge side.

One or more of the aforesaid objects are accomplished by using such a device. In particular, the lower-quality quartz will accumulate in a limited area on the interior of the hollow substrate tube when an insert tube thus configured is used, which means that the length along which said accumulation on the interior of the hollow substrate tube takes place will be reduced to a minimum. According to the present inventors, this surprising effect is caused by the special configuration of the insert tube, which causes turbulences of the gass flows to occur in the interior of the hollow substrate tube, near the truncated cone portion of the insert tube, such that the deposition of lower-quality quartz will be concentrated in a confined and thus limited area of the hollow substrate tube. The result will be that a substrate tube is obtained of which the "usable" part, viz. the length from which optical fibre of a constant quality can be obtained, is greater than in a situation in which the deposition process is carried out without using such an insert tube.

In the present invention it is in particular desirable that the diameter of the truncated cone portion, measured at the end thereof that faces towards the supply side, viz. at the narrow end of the truncated cone portion, be selected so that the aforesaid diameter is maximally 0.9 times the external diameter of the central portion. Such a construction has been found to be suitable in particular for concentrating an accumulation and a concentration of lower-quality quartz on the interior of the hollow substrate tube to a limited area.

In a special embodiment, the diameter of the truncated cone portion, measured at the end thereof that faces towards the supply side, preferably ranges between 0.35 times the external diameter of the central portion and 0.90 times the external diameter of the central portion. As a result of the thus selected special diameter of the truncated cone portion, the deposition of glass layers having a composition essentially different from that of the glass layers deposited on the central portion of the hollow substrate tube, is limited to a more confined area on the interior of the hollow substrate tube.

The position of the insert tube is such that the end of the truncated cone portion that faces towards the supply side is located outside the area marked by the reversal point on the supply side and the reversal point on the discharge side of the hollow substrate tube.

The insert tube itself is hollow, so that the gases that have not been deposited on the interior of the hollow substrate tube will be discharged through the insert tube, whilst there is also a possibility that the aforesaid gases will travel via the annual space formed between the external diameter (outer surface) of the central portion of the insert tube and the internal diameter (inner surface) of the hollow substrate tube.

In a special embodiment it is furthermore desirable that an element for scraping off solid components that have not been deposited on the interior of the substrate tube and/or the insert tube be disposed within the tube in question, which element makes contact with the internal diameter (inner surface) of the tube in question. A rotating bar is such a suitable element.

When the present invention is used, no cracking of the glass layers deposited on the interior of the hollow substrate tube will occur either during or after the deposition process, whilst in addition no formation of bubbles will occur during the collapsing process. Moreover, when the present device is used, a longer (time-wise) deposition process is possible, because clogging on the discharge side has been minimised. In addition to that, the present inventors have found that no undesirable change occurs as regards the uniformity of the solid preform obtained after collapsing, in particular on the discharge side of the substrate tube. Using the present device it is possible, therefore, to utilise the high-quality glass material of the substrate tube substantially entirely, i.e. to realise a maximum utilisation of the length of the substrate tube, for drawing optical fibres therefrom.

The present invention further relates to a method for manufacturing an optical preform by means of an internal vapour deposition process, wherein glass-forming precursors are supplied to a hollow, quartz substrate tube on the supply side thereof, which substrate tube further has a discharge side, where components which have not been deposited on the interior of the hollow substrate tube are discharged, wherein an energy source is moved along the length of the hollows substrate tube between a reversal point on the supply side and a reversal point on the discharge side at least during the deposition process for the purpose of generating deposition conditions in the hollow substrate tube, characterised in that an insert tube is placed in the interior of the hollow substrate tube, on the discharge side thereof, before the glass-forming precursors are supplied to the interior of the hollow substrate tube, which insert tube comprises a central portion and a truncated cone portion, wherein the external diameter of the end of the truncated cone portion is smaller than the external diameter of the central portion, which truncated cone portion faces towards the supply side, whilst furthermore the external diameter of the central portion is smaller than the internal diameter of the hollow substrate tube near the discharge side.

The conditions that prevail in the hollow substrate tube will result in the deposition of one or more glass layers by the glass-forming precursors on the interior of the hollow substrate tube. A solid preform is obtained by collapsing the hollow substrate tube, which may furthermore be provided with additional glass layers on the exterior thereof, after the deposition process, from which solid preform optical fibres can be drawn after heating of one end thereof.

Special embodiments of the present method are defined in the appended subclaims.

The present invention further relates to a method for manufacturing an optical fibre wherein use is made of a solid preform obtained by carrying out an internal vapour deposition process according to the present invention.

The present invention will be explained in more detail hereinafter by means of an example, in which connection it should be noted, however, that the present invention is by no means limited to such a special example.

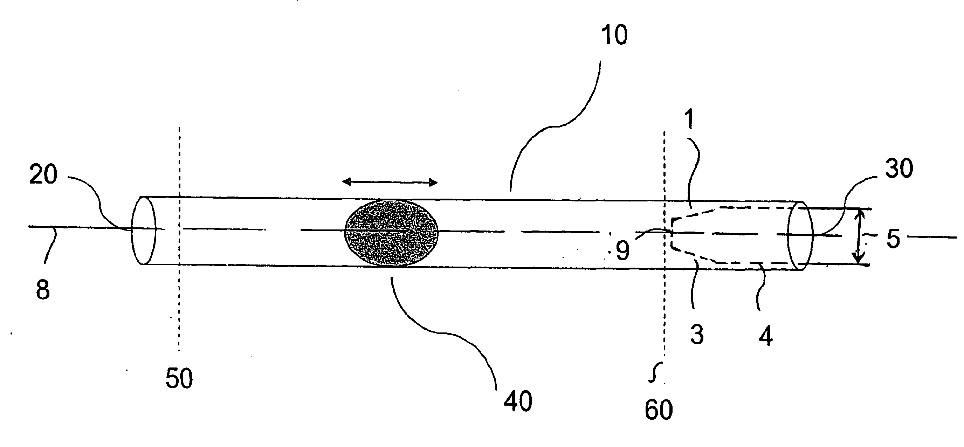

The figure schematically shows the device according to the present invention. A hollow glass substrate tube 10 is provided with glass-forming precursors (not shown) on the supply side 20 of substrate tube 10, with the gas flow with the glass-forming precursors present therein travelling from the left to the right in the figure. To effect a deposition of such glass-forming precursors, a resonator (not shown) for generating plasma 40 is reciprocated along the length of the substrate tube 10, with the resonator for generating plasma reversing on the discharge side 30, near the position indicated at 60, subsequently moving back along the length of the substrate tube 10 in the direction of the supply side 20 and returning from there to the discharge side 30, with the reversal point on the supply side 20 being schematically indicated at 50. For the sake of completeness it should be noted that the supply of glass-forming precursors takes place on the supply side 20 in the direction of the pump or discharge side 30. The axis of symmetry of the substrate tube 10 is indicated at 8. In one embodiment the substrate tube 10 and the resonator (not shown) are surrounded by a furnace, with the resonator thus being reciprocated along the length of the substrate tube 10 between the reversal point 50 and the reversal point 60 in the furnace during the deposition process.

Disposed on the discharge side 30 of the substrate tube 10, at a position located outside the area marked by the reversal point 50 - reversal point 60, is an insert tube 1 made of quartz, which has a truncated cone portion 3 and a central portion 4. The insert tube 1 is thus positioned in the interior of the hollow substrate tube 10, in such a manner that the external diameter of the central portion 4, which is indicated at 5, is smaller than the internal diameter of the hollow substrate tube 10 near the discharge side 30. It is in particular desirable that the external diameter of the truncated cone portion 3 near the end thereof, which is indicated at 9, ranges between 0.35 times the external diameter of the central portion 4 and 0.90 times the external diameter of the central portion 4. As a result of this conical shape of the insert tube 1, schematically represented as the truncated cone portion 3, the distance over which inferior quality glass will deposit on the interior of the hollow substrate tube 10 near the reversal point 60 on the discharge side 30 will be small, in particular in comparison with an embodiment in which the insert tube 1 is altogether missing, or in which an insert tube 1 is used which is not provided with an end having a truncated cone portion 3, which truncated cone portion 3 faces towards the supply side 20.

During the PCVD process, the resonator is moved along a length of about 1.3 m over the substrate tube 10, with the resonator for generating plasma 40 reciprocating between the reversal point 50 and the reversal point 60. After the PCVD process has been terminated, the substrate tube 10 is collapsed into a solid preform. A solid preform thus obtained may furthermore be externally provided with one or more additional glass layers, after which the preform thus obtained is mounted in a drawing tower for the purpose of obtaining an optical glass fibre therefrom while supplying heat. The total length of the high quality glass fibre thus obtained essentially corresponds to the entire central portion of the substrate tube 10, in fact the region between the reversal point 50 near the supply side 20 and the reversal point 60 near the discharge side 30.

## Claims

1. A device for manufacturing an optical preform by means of an internal vapour deposition process, comprising an energy source and a hollow, quartz substrate tube (10), which hollow substrate tube (10) has a supply side (20), where glass-forming precursors are supplied to the interior of the hollow substrate tube (10), and a discharge side (30), where components which have not been deposited on the interior of the substrate tube (10) are discharged, the energy source bein movable along the length of the hollow substrate tube (10) between a reversal point (50) on the supply side and a reversal point (60) on the discharge side, **characterised in that** an insert tube (1) is present in the interior of the hollow substrate tube (10), on the discharge side (30) thereof, which Insert tube (1) comprises a central portion (4) and a truncated cone portion (3), where the external diameter of the end of the truncated cone portion (3) is smaller than the external diameter of the central portion (4) which truncated cone portion (3) faces towards the supply side (20), whilst furthermore the external diameter of the central portion (4) is smaller than the internal diameter of the hollow substrate tube (10) near the discharge side(3o) .

2. A device according to claim 1, **characterised in that** the diameter of the truncated cone portion (3), measured at the end thereof that faces towards the supply side (20), is maximally 0.9 times the external diameter of the central portion (4).

3. A device according to any one or more of the preceding claims, **characterised in that** the diameter of the truncated cone portion (3), measured at the end thereof that faces towards the supply side (20), ranges between 0.35 times the external diameter of the central portion (4) and 0.90 times the external diameter of the central portion (4).

4. A device according to any one or more of the preceding claims, **characterised in that** the insert tube (1) extends in the direction of the supply side (20) to a position outside the area that is located between the reversal point (50) on he supply side and the reversal pointion (60) the discharge side.

5. A method for manufacturing an optical preform by means of an internal vapour deposition process, wherein glass-forming precursors are supplied to a hollow, quartz substrate tube (10) on the supply side (20) thereof, which substrate tube (10) further has a discharge side (30), where components which have not been deposited on the interior of the hollow substrate tube (10) are discharged, wherein an energy source is moved along the length of the hollow substrate tube (10) between a reversal point (50) on the supply side and a reversal point (60) on the discharge side for the purpose of generating deposition conditions in the hollow substrate tube (10), **characterised in that** an insert tube (1) is placed In the interior of the hollow substrate tube (10), on the discharge side (30) thereof, before the glass-forming precursors are supplied to the interior of the hollow substrate tube (10), which insert tube (1) comprises a central portion (4) and a truncated cone portion (3), wherein the external diameter of the end of the truncated cone portion (3) is smaller than the external diameter of the central portion (4), which truncated cone portion (3) faces towards the supply side (20), whilst furthermore the external diameter of the central portion (4) is smaller than the internal diameter of the hollow substrate tube (10) near the discharge side (30).

6. A method according to claim 5, **characterised in that** an Insert tube (1) having a truncated cone portion (3) is used, the diameter of which truncated cone portion (3), measured at the end that faces towards the supply side (20), is maximally 0.9 times the external diameter of the central portion (4).

7. A method according to any one or more of the claims 5-6, **characterised in that** an insert tube (1) having a truncated cone portion (3) is used, the diameter of which truncated cone portion (3) franges between 0.35 times the external diameter of the central portion (4) and 0.90 times the external diameter of the central portion (4).

8. A method according to any one or more of the claims 5-7, **characterised in that** the insert tube (1) is positioned in the interior of the hollow substrate tube (10) in such a manner that the insert tube (1) is disposed on the discharge side (30) of the hollow substrate tube (10), outside an area that is located between the reversal point (50) on the supply side and the reversal point on (60) the discharge side.

9. A method according to any one or more of the claims 5-8, **characterised in that** a plasma generator is used as the energy source.

10. A method according to any one or more of the claims 5-9, **characterised in that** the insert tube (1) is removed from the hollow substrate tube (10) after the deposition of glass layers on the interior of the hollow substrate tube (10), after which the hollow substrate tube (10) thus obtained, whose interior is provided with one or more glass layers obtained by deposition, is subjected to a collapsing process so as to obtain a solid preform.

11. A method for manufacturing an optical fibre by heating a preform at an end thereof and subsequently drawing an optical fibre therefrom, **characterised in that** a preform obtained by carrying out the method according to claim 10 is used.

## Patentansprüche

1. Vorrichtung zum Herstellen einer optischen Vorform durch einen internen Gasphasenabscheidungsprozess, umfassend eine Energiequelle und ein hohles Quarzsubstratrohr (10), wobei das hohle Substratrohr (10) eine Zufuhrseite (20), an der dem Inneren des hohlen Substratrohrs (10) glasbildende Ausgangsstoffe zugeführt werden, und eine Abfuhrseite (30), an der Komponenten, die nicht an der Innenseite des Substratrohrs (10) abgeschieden wurden, abgeführt werden, aufweist, wobei die Energiequelle entlang der Länge des hohlen Substratrohrs (10) zwischen einem Umkehrpunkt (50) an der Zufuhrseite und einem Umkehrpunkt (60) an der Abfuhrseite beweglich ist, **dadurch gekennzeichnet, dass** ein Einsatzrohr (1) im Inneren des hohlen Substratrohrs (10) an der Abfuhrseite (30) desselben vorgesehen ist, wobei das Einsatzrohr (1) einen zentralen Abschnitt (4) und einen Kegelstumpfabschnitt (3) umfasst, wobei der Außendurchmesser des Endes des Kegelstumpfabschnitts (3) kleiner als der Außendurchmesser des zentralen Abschnitts (4) ist, wobei der Kegelstumpfabschnitt (3) zu der Zufuhrseite (20) gerichtet ist, während ferner der Außendurchmesser des zentralen Abschnitts (4) kleiner als der Innendurchmesser des hohlen Substratrohrs (10) nahe der Abfuhrseite (30) ist.

2. Vorrichtung nach Anspruch 1, **dadurch gekennzeichnet, dass** der Durchmesser des Kegelstumpfabschnitts (3) gemessen an dem Ende, das zu der Zufuhrseite (20) gerichtet ist, maximal 0,9 mal dem Außendurchmesser des zentralen Abschnitts (4) ist.

3. Vorrichtung nach einem oder mehreren der vorhergehenden Ansprüche, **dadurch gekennzeichnet, dass** der Durchmesser des Kegelstumpfabschnitts (3) gemessen an dem Ende, das zu der Zufuhrseite (20) gerichtet ist, zwischen 0,35 mal dem Außendurchmesser des zentralen Abschnitts (4) und 0,90 mal dem Außendurchmesser des zentralen Abschnitts (4) liegt.

4. Vorrichtung nach einem oder mehreren der vorhergehenden Ansprüche, **dadurch gekennzeichnet, dass** sich das Einsatzrohr (1) in der Richtung der Zufuhrseite (20) bis zu einer Position außerhalb des Bereichs, der zwischen dem Umkehrpunkt (50) an der Zufuhrseite und dem Umkehrpunkt (60) an der Abfuhrseite angeordnet ist, erstreckt.

5. Verfahren zum Herstellen einer optischen Vorform durch einen internen Gasphasenabscheidungsprozess, wobei glasbildende Ausgangsstoffe einem hohlen Quarzsubstratrohr (10) an der Zufuhrseite (20) desselben zugeführt werden, wobei das Substratrohr (10) weiterhin eine Abfuhrseite (30) aufweist, an der Komponenten, die nicht an der Innenseite des hohlen Substratrohrs (10) abgeschieden wurden, abgeführt werden, wobei eine Energiequelle entlang der Länge des hohlen Substratrohrs (10) zwischen einem Umkehrpunkt (50) an der Zufuhrseite und einem Umkehrpunkt (60) an der Abfuhrseite zu dem Zweck, Abscheidungsbedingungen in dem hohlen Substratrohr (10) zu erzeugen, bewegt wird, **dadurch gekennzeichnet, dass** ein Einsatzrohr (1) im Inneren des hohlen Substratrohrs (10) an der Abfuhrseite (30) desselben platziert wird, bevor die glasbildenden Ausgangsstoffe dem Inneren des hohlen Substratrohrs (10) zugeführt werden, wobei das Einsatzrohr (1) einen zentralen Abschnitt (4) und einen Kegelstumpfabschnitt (3) umfasst, wobei der Außendurchmesser des Endes des Kegelstumpfabschnitts (3) kleiner als der Außendurchmesser des zentralen Abschnitts (4) ist, wobei der Kegelstumpfabschnitt (3) zu der Zufuhrseite (20) gerichtet ist, während ferner der Außendurchmesser des zentralen Abschnitts (4) kleiner als der Innendurchmesser des hohlen Substratrohrs (10) nahe der Abfuhrseite (30) ist.

6. Verfahren nach Anspruch 5, **dadurch gekennzeichnet, dass** ein Einsatzrohr (1) mit einem Kegelstumpfabschnitt (3) verwendet wird, wobei der Durchmesser des Kegelstumpfabschnitts (3) gemessen an dem Ende, das zu der Zufuhrseite (20) gerichtet ist, maximal 0,9 mal dem Außendurchmesser des zentralen Abschnitts (4) ist.

7. Verfahren nach einem oder mehreren der Ansprüche 5-6, **dadurch gekennzeichnet, dass** ein Einsatzrohr (1) mit einem Kegelstumpfabschnitt (3) verwendet wird, wobei der Durchmesser des Kegelstumpfabschnitts (3) zwischen 0,35 mal dem Außendurchmesser des zentralen Abschnitts (4) und 0,90 mal dem Außendurchmesser des zentralen Abschnitts (4) liegt.

8. Verfahren nach einem oder mehreren der Ansprüche 5-7, **dadurch gekennzeichnet, dass** das Einsatzrohr (1) im Inneren des hohlen Substratrohrs (10) derart positioniert wird, dass das Einsatzrohr (1) an der Abfuhrseite (30) des hohlen Substratrohrs (10) außerhalb eines Bereichs angeordnet ist, der zwischen dem Umkehrpunkt (50) an der Zufuhrseite und dem Umkehrpunkt (60) an der Abfuhrseite angeordnet ist.

9. Verfahren nach einem oder mehreren der Ansprüche 5-8, **dadurch gekennzeichnet, dass** ein Plasmagenerator als die Energiequelle verwendet wird.

10. Verfahren nach einem oder mehreren der Ansprüche 5-9, **dadurch gekennzeichnet, dass** das Einsatzrohr (1) von dem hohlen Substratrohr (10) nach dem Abscheiden von Glasschichten an der Innenseite des hohlen Substratrohrs (10) entfernt wird, wobei anschließend das so erhaltene hohle Substratrohr (10), dessen Inneres mit einer oder mehreren durch Abscheidung erhaltenen Glasschichten versehen ist, einem Kollabierprozess unterzogen wird, um so eine feste Vorform zu erhalten.

11. Verfahren zum Herstellen einer optischen Faser durch Erwärmen einer Vorform an einem Ende derselben und anschließendes Ziehen einer optischen Faser daraus, **dadurch gekennzeichnet, dass** eine durch Durchführen des Verfahrens nach Anspruch 10 erhaltene Vorform verwendet wird.

## Revendications

1. Dispositif destiné à la fabrication d'une préforme optique au moyen d'un processus de dépôt en phase vapeur interne, comprenant une source d'énergie et un tube substrat en quartz (10) creux, lequel tube substrat (10) creux a un côté d'alimentation (20), où des précurseurs de formation de verre sont fournis à l'intérieur du tube substrat (10) creux, et un côté de décharge (30), où des composants qui n'ont pas été déposés sur l'intérieur du tube substrat (10) sont déchargés, la source d'énergie étant mobile le long de la longueur du tube substrat (10) creux entre un point d'inversion (50) sur le côté d'alimentation et un point d'inversion (60) sur le côté de décharge, **caractérisé en ce qu'**un tube d'insertion (1) est présent à l'intérieur du tube substrat (10) creux sur son côté de décharge (30), lequel tube d'insertion (1) comprend une partie centrale (4) et une partie tronconique (3), où le diamètre externe de l'extrémité de la partie tronconique (3) est plus petit que le diamètre externe de la partie centrale (4), laquelle partie tronconique (3) fait face au côté d'alimentation (20), tandis qu'en outre le diamètre externe de la partie centrale (4) est plus petit que le diamètre interne du tube substrat (10) creux proche du côté de décharge (30).

2. Dispositif selon la revendication 1, **caractérisé en ce que** le diamètre de la partie tronconique (3) mesuré au niveau de son extrémité qui fait face au côté d'alimentation (20) est au maximum de 0,9 fois le diamètre externe de la partie centrale (4).

3. Dispositif selon l'une quelconque ou plusieurs des revendications précédentes, **caractérisé en ce que** le diamètre de la partie tronconique (3) mesuré au niveau de son extrémité qui fait face au côté d'alimentation (20) varie entre 0,35 fois le diamètre externe de la partie centrale (4) et 0,90 fois le diamètre externe de la partie centrale (4).

4. Dispositif selon l'une quelconque ou plusieurs des revendications précédentes, **caractérisé en ce que** le tube d'insertion (1) s'étend dans la direction du côté d'alimentation (20) jusqu'à une position à l'extérieur de la zone qui est située entre le point d'inversion (50) sur le côté d'alimentation et le point d'inversion (60) sur le côté de décharge.

5. Procédé de fabrication d'une préforme optique au moyen d'un processus de dépôt en phase vapeur interne, dans lequel des précurseurs de formation de verre sont fournis à un tube substrat en quartz (10) creux sur son côté d'alimentation (20), lequel tube substrat (10) a en plus un côté de décharge (30) où des composants qui n'ont pas été déposés à l'intérieur du tube substrat (10) creux sont déchargés, où une source d'énergie est déplacée le long de la longueur du tube substrat (10) creux entre un point d'inversion (50) sur le côté d'alimentation et un point d'inversion (60) sur le côté de décharge dans le but de générer des conditions de dépôt dans le tube substrat (10) creux, **caractérisé en ce qu'**un tube d'insertion (1) est placé à l'intérieur du tube substrat (10) creux sur son côté de décharge (30), avant que les précurseurs de formation de verre ne soient fournis à l'intérieur du tube substrat (10) creux, lequel tube d'insertion (1) comprend une partie centrale (4) et une partie tronconique (3), où le diamètre externe de l'extrémité de la partie tronconique (3) est plus petit que le diamètre externe de la partie centrale (4), laquelle partie tronconique (3) fait face au côté d'alimentation (20), tandis qu'en outre le diamètre externe de la partie centrale (4) est plus petit que le diamètre interne du tube substrat (10) creux proche du côté de décharge (30).

6. Procédé selon la revendication 5, **caractérisé en ce qu'**un tube d'insertion (1) ayant une partie tronconique (3) est utilisé, dont le diamètre de la partie tronconique (3) mesuré au niveau de l'extrémité qui fait face au côté d'alimentation (20) est au maximum 0,9 fois le diamètre externe de la partie centrale (4).

7. Procédé selon l'une quelconque ou plusieurs des revendications 5 et 6, **caractérisé en ce qu'**un tube d'insertion (1) ayant une partie tronconique (3) est utilisé, dont le diamètre de la partie tronconique (3) varie entre 0,35 fois le diamètre externe de la partie centrale (4) et 0,90 fois le diamètre externe de la partie centrale (4).

8. Procédé selon l'une quelconque ou plusieurs des revendications 5 à 7, **caractérisé en ce que** le tube d'insertion (1) est positionné à l'intérieur du tube substrat (10) creux de telle sorte que le tube d'insertion (1) soit disposé sur le côté de décharge (30) du tube substrat (10) creux à l'extérieur d'une zone qui est située entre le point d'inversion (50) sur le côté d'alimentation et le point d'inversion (60) sur le côté de décharge.

9. Procédé selon l'une quelconque ou plusieurs des revendications 5 à 8, **caractérisé en ce qu'**un générateur de plasma est utilisé en tant que source d'énergie.

10. Procédé selon l'une quelconque ou plusieurs des revendications 5 à 9, **caractérisé en ce que** le tube d'insertion (1) est retiré du tube substrat (10) creux après le dépôt de couches de verre à l'intérieur du tube substrat (10) creux, après quoi le tube substrat (10) creux ainsi obtenu, dont l'intérieur est doté d'une ou de plusieurs couches de verre obtenues par dépôt, est soumis à un processus d'affaissement de façon à obtenir une préforme solide.

11. Procédé de fabrication d'une préforme optique en chauffant une préforme au niveau de son extrémité et en tirant par la suite une fibre optique de celle-ci, **caractérisé en ce qu'**une préforme obtenue en exécutant le procédé selon la revendication 10 est utilisée.
